# EUROPEAN PATENT APPLICATION

(11) **EP 4 190 142 A1**
(43) Date of publication of application: **07.06.2023**
(21) Application number: 21211823.6
(22) Date of filing: 01.12.2021
(51) Int. Cl.: A01G 18/60, A01G 18/62

(54) **METHOD OF CULTIVATING FUNGI AND PRODUCTION SITE FOR CULTIVATING FUNGI IN ACCORDANCE WITH SAID METHOD**

(71) Applicant: Muzzroom BV, 8770 Ingelmunster (BE)
(72) Inventor: LAPIERRE, Stefaan, 8770 Ingelmunster (BE)
(74) Representative: BiiP cvba

(57) **Abstract**

A method of cultivating mushrooms, said method comprising:
(a) growing mushrooms on a substrate in a growing cell until buds are formed;
(b) transferring the substrate with buds from the growing cell to a harvesting cell;
(c) picking mushrooms from the substrate during a first flush in the harvesting cell;
(d) picking mushrooms from the substrate during a second flush in the harvesting cell;
(e) disposing the substrate;

wherein in the growing cell, the substrate is provided on different layers of stacked longitudinal beds of a first rack; and wherein in the harvesting cell the substrate is provided on different layers of stacked longitudinal beds of a second rack;
characterized in that the each of the beds of the first rack has a corresponding bed on the second rack, with corresponding beds extending on a substantially same level in view of the ground level in the growing cell and along a same straight line extending in the longitudinal direction of the concerning beds.

## Description

### Field of the Invention

The present invention concerns a method for cultivating fungi and in particular mushrooms, as well as a production site for cultivating fungi in accordance with that method.

### Background to the Invention

It is common practice to cultivate mushrooms and in particular edible mushrooms on shelves in a rack installed in a hangar. In industrial farms, the racks typically hold one or two rows of five to six vertically stacked horizontal shelves, with each shelve having a length of about 80 to 120 m long. In case a rack holding a single row of vertically stacked shelves, the shelves typically have a width of 1,20 to 1,50 metres, whereas in case of racks holding two rows of vertically stacked shelves, the shelves have a width that typically ranges between 0,60 and 0,75 metres.

In short, the cultivation of mushrooms follows a cultivation cycle with one or more growing phases that typically takes two weeks and one or more subsequent harvesting phases.

In industrial mushroom farms, the cultivation cycle typically starts from a colonized substrate that is covered with casing soil. Colonized substrate is substrate that has been grafted with fungal mycelium (eg. mushroom spawn) in which the mycelium has been allowed to, at least partly, colonize the substrate. At the start of the growing phases, the colonized substrate is disposed in a cultivation cell and topped with a layer of casing soil. In this case the growing phases comprise a mycelium growth phase and a budding phase. During the mycelium growth phase the mycelium grows from the colonized substrate through the casing soil. Subsequently, buds are formed by the mycelium. This is the budding phase. The entire growing phases including the mycelium growth phase and budding phase take approximately 14 days.

After the budding phase, the harvesting phases starts. A harvesting phase is a period during which mushrooms are harvested or 'picked'. Picking preferably takes place manually. The harvesting phases start with a first harvesting phase also referred to as a 'first flush'. During the first flush, picking is carried out for a period of 3 to 6 days, after which picking is ceased for a few days. Subsequently a second harvesting phase or second flush starts wherein picking is performed for about 2 to 5 days. The first and second flush together last for approximately 14 days. If desired a third flush can be performed during the harvesting phases, however as both yield and quality of the mushrooms decrease from flush to flush, a third flush is often considered economically undesirable.

Key to efficient growing phases is a good regulation of the environmental conditions such as temperature, light, pressure, moisture and air circulation, which is not compatible with good harvesting conditions for labourers.

Harvesting or picking of mushrooms in labour intensive and a taxing job requiring labourers to perform repetitive actions and holding taxing working postures for extended periods of time, especially when the mushrooms are harvested from racks wherein the shelves are superimposed quite close above another.

To facilitate labourer's work during harvesting, NL 9001797 discloses an installation wherein the mushrooms are grown in longitudinal boxes provided on the superimposed shelves of a rack. The boxes, which each have a dimension of 10 m long and 1,5 m wide, are individually movably in the longitudinal direction of the shelves. In a space next to the rack a harvesting unit is provided comprising a single shelve positioned at a convenient height for labourers to harvest mushrooms.

In operation, one box at a time is slid from a shelve in one of the racks on the shelve of the harvesting unit for harvesting mushrooms. Once the box is harvested, it is slid back onto the shelve where it was originally stored in the racks and another box is placed on the harvesting shelve.

Although NL '797 increases the working comfort for the labourers, it fails to provide an economically viable solution. First of all as it only allows harvesting one box at a time and secondly the disclosed workflow involves a lot of downtime for sliding the boxes in an out of the racks on to the harvesting shelve. The downtime, wherein no harvesting is done, decreases production efficiency, in particular when taking into account that each box may easily be harvested over ten different times during the harvesting phases.

In addition, NL '797 starts from boxes with a very limited length of 10 m, this in contradiction with current nets topped with compost and casing having a length of up to 120 m and weighing over 4 ton/net that are not that easily displaced as the boxes disclosed in NL '797.

WO2018/185644 discloses an industrial site comprising several cultivation cells, wherein a first cultivation cell is designated for the growing phases of the mushrooms, a second cell is designated for manual harvesting phases of the mushrooms and a third cultivation cell is designated for machine picking of mushrooms during a third or subsequent flush.

In the first cultivation cell, the mushrooms are grown in beds that are arranged on racks, each rack holding four stacked layers of beds. To allow picking by hand, the second cultivation cell has a larger surface area than the first cultivation cell allowing to place beds with mushrooms further apart and in maximum two superimposed levels, which results in a rather large areal surface. For the transfer of the mushrooms from one cultivation cell to another, WO'644 mentions providing the colonized substrate and casing soil on mats that are arranged on the beds. By rolling up a first mat the substrate and casing soil provided thereon can be transferred to a second mat unrolled next to the first mat. Such handling is cumbersome and may cause cracking and braking of the substate and casing soil layer.

From the above it is clear that there remains a need for an easy manageable and efficient workflow for cultivating mushrooms.

### Summary of the Invention

The present invention addresses the above need and concerns a method of cultivating mushrooms, said method comprising:
(a) growing mushrooms on a substrate in a growing cell until buds are formed;
(b) transferring the substrate with buds from the growing cell to a harvesting cell;
(c) picking mushrooms from the substrate during a first flush in the harvesting cell;
(d) picking mushrooms from the substrate during a second flush in the harvesting cell;
(e) disposing the substrate;
wherein in the growing cell, the substrate is provided on different layers of stacked longitudinal beds of a first rack; and wherein in the harvesting cell the substrate is provided on different layers of stacked longitudinal beds of a second rack;
characterized in that the each of the beds of the first rack has a corresponding bed on the second rack, with corresponding beds extending on a substantially same level in view of the ground level in the growing cell and along a same straight line extending in the longitudinal direction of the concerning beds.

The picking of the mushrooms during the first flush is preferably done manually. The picking of the mushrooms during the second flush is preferably done manually.

Preferably the ground level of the growing cell differs from the ground level of the harvesting cell by at least 50 cm, preferably at least 60 cm.

In accordance with a preferred method, the beds of second rack are configured to rotate over an axis X extending in a longitudinal direction of the beds between a first position wherein the beds are positioned substantially horizontally and a second position wherein the beds are inclined in view of the horizontal.

The present invention also concerns a production site for cultivating mushrooms, said production site comprising:
(a) a growing cell wherein a first rack is provided comprising different layers of vertically stacked longitudinal beds;
(b) a harvesting cell wherein a second rack is provided comprising different layers of vertically stacked longitudinal beds;
characterized in that each of the beds of the first rack has a corresponding bed on the second rack, with corresponding beds extending on a substantially same level in view of the ground level in the growing cell and along a same straight line extending in the longitudinal direction of the concerning beds.

Preferably a lowermost bed of the first rack is positioned closer to a floor level in the growing cell than a lowermost bed of the second rack is positioned from a floor level in the harvesting cell.

In a preferred production site of the invention, the growing cell and harvesting cell are positioned at a distance of one another, with a corridor in between both cells and with a bridge unit movably arranged in said corridor, said bridge unit is configured as a rack having multiple beds, each bed of the bridge having a corresponding bed on the first rack, whereby when positioning the bridge between the growing and harvesting cell each bed of the bridge provides a support for the substrate upon transfer thereof from a bed on the first rack to a corresponding bed on the second rack.

### Brief Description of the Figures

Fig. 1 schematically represents a ground plan of a production site of the invention;
Fig. 2 schematically represent a side view on a production site of the invention.

### Detailed Description

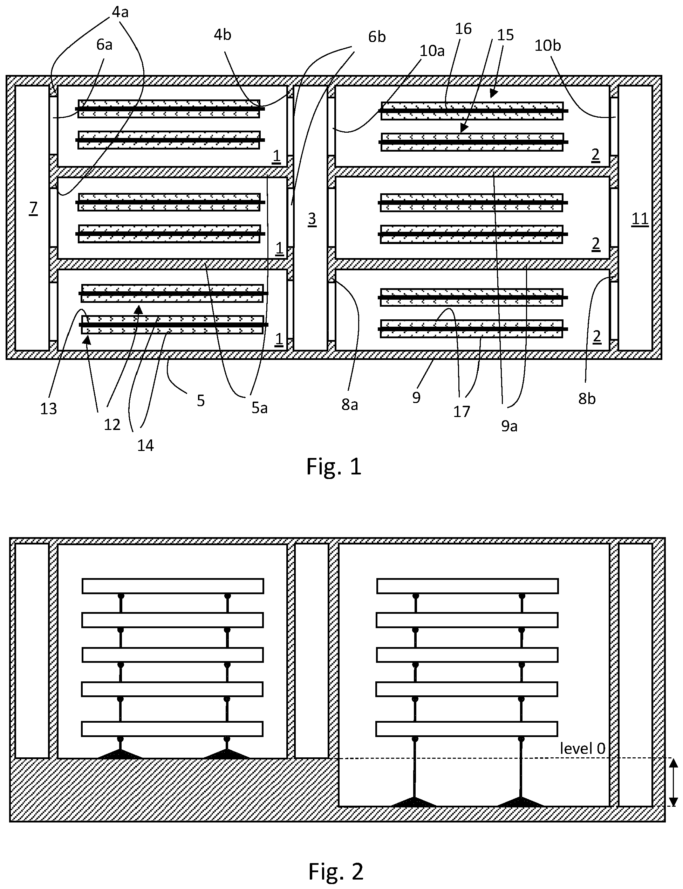

As illustrated in Fig. 1, a production site according to the present invention with, in this case three growing cells (1), three harvesting cells (2) and a corridor (3) between the growing and harvesting cells (1, 2).

Both the growing cells and the harvesting cells are preferably made such that they can be shut-off hermetically and placed under slight overpressure to enable good control of the environmental conditions in each cell independently.

Each growing cell (1) is built as a longitudinal room with transversal sides (4) and longitudinal sides (5). In both transversal sides (4) access doors (6) are provided. The growing cells (1) of the illustrated production site are situated one next to the other with a common longitudinal wall (5a) between two adjacent growing cells (1). The doors (6a) at a first transversal side (4a) of each growing cell gives access to a site entrance (7), whereas the doors (6b) at the second transversal side (4b) of each growing cell give access to the corridor (3).

Each growing cell (1) is approximately 82 m to 122 m long and 4,5 m wide and has a floor level that is further indicated as level 0.

The harvesting cell (2) are also situated one next to the other at an opposed side of the corridor (3) from the growing cells (1). Each harvesting cell is built as a longitudinal room with transversal sides (8) and longitudinal sides (9). In both transversal sides (8) access doors (10) are provided. The harvesting cells (2) of the illustrated production site are situated one next to the other with a common longitudinal wall (9a) between two adjacent harvesting cells (2). The doors (10a) at a first transversal side (8a) of each harvesting cell gives access to the corridor (3), whereas the doors (10b) at the second transversal side (8b) of each harvesting cell give access to a labourer's quarter (11) or packing room.

Each harvesting cell (3) is approximately 85 m to 125 m long and 4,5 m wide and preferably has a floor level that is 50 to 120 cm below level 0, preferably between 60 and 90 cm below level 0.

As illustrated in Fig. 1 and 2, two racks (12) are provided in each growing cell. Each rack comprises a longitudinal central frame (13) with at each side thereof a row of five vertically stacked beds (14) that are positioned one above the other at a vertical distance of about 40 to 60 cm. The beds of both rows positioned pair by pair on a same height.

A lowermost bed of each row situated at approximately 10 to 20 cm above level 0.

Each bed preferably has a length of 80 m to 120 m and width (measured in a horizontal plane perpendicular to the longitudinal direction) of between 60 and 75 cm and has a supporting surface extending predominantly horizontally. Preferably the beds in the growing cells are fixed and can not tilt in view of the corresponding racks.

In accordance with the present invention, each bed in the growing cells has a (single) corresponding bed in the harvesting cells (and vice versa).

In this case two racks (15) are provided in each harvesting cell. Each rack (15) comprises a longitudinal central frame (16) with at each side thereof a row of five vertically stacked beds (17) that are positioned one above the other at a vertical distance of about 40 to 60 cm. The beds of both rows positioned pair by pair on a same height.

The racks in the harvesting cells are positioned such that each bed thereof extends a same longitudinal line and at substantially the same height in view of level 0 as the corresponding bed in the growing cells. The number of beds in the harvesting cells is therefore the same as the number of beds in the growing cells. The beds in the harvesting cells preferably have approximately the same dimensions as the beds in the growing cells.

Preferably, the the beds (17) of racks in the harvesting cells are configured to rotate over an axis X extending in a longitudinal direction of the beds between a first position wherein the beds are positioned substantially horizontally and a second position wherein the beds are inclined in view of the horizontal towards a longitudinal passage next to the beds in the harvesting cells.

As shown in Fig. 2, the harvesting cells preferably have a ground level that is at least 50 cm, preferably at least 60 cm lower than the ground level (level 0) in the growing cells, which results in the lowermost beds of the racks in the harvesting cells being positioned at about 60 to 70cm above the ground level of the harvesting cells.

Further a dedicated pathway is provided next to each row of beds in the harvesting cells, which pathway extends longitudinally along the entire length of the beds in the harvesting cells and which pathway is mounted on a construction allowing vertically moving the pathway such that a laborer can access all beds in one rack via said pathway by moving the pathway vertically. Movement of the pathway is preferably motorized and electronically driven as is the tilting of the beds in the harvesting cells between a horizontal position and a position wherein the beds are tilted towards the pathway to facilitate picking of mushrooms on each bed.

At the side of the racks facing the labourer's quarter or packing room, a subfloor conveyor may be provided that is accessible through hatches in the floor of the harvesting room and serve to convey disposed substrate out of the harvesting room.

In the corridor a bridge is provided that comprises a rack having a same number and configuration of beds as the racks in the growing cells. The bridge is movably in a transversal direction of the racks in the growing cells and is preferably guided on fixed rails. By movement of the bridge, the rack and beds thereof can be positioned between facing end portions of two corresponding racks in, on the one hand the growing cells and on the other hand the harvesting cells, such that a substrate provided on a mat on the growing beds of a rack can be pulled together with the mat over the bridge to the corresponding bed in the harvesting cells.

Devices for pulling the mats are well known in the art and currently used for loading and unloading mats with substrate from mushroom cultivation racks. These devices will not be disclosed in more details here.

In use, the production site is well suited for a cultivation cycle wherein mats loaded with a mycelium colonized substrate and topped with a casing soil are pulled on the beds in the growing cells, where growing phases including a mycelium growth phase and a budding phase take place under well-controlled environmental conditions. After approximately 14 days, when the mushrooms are then ready for harvesting and can be transferred via the bridge the harvesting cells, where labourers can manually pick mushrooms for 3 to 6 days in a first flush, followed by a second flush some days later. The first and second flush together will take approximately 14 days. Upon transfer of the mushrooms from the growing cells to the harvesting cells, mats with new substrate can be loaded in the growing cells, such that after approximately 14 days at the end of the second flush in the harvesting cells, the substate can be disposed and new budding mushrooms can be loaded into the harvesting cells.

The production site of the invention and the concerned method allow for ideal growing and harvesting conditions that can be controlled independently one from the other (and even independently from cell to cell). Further the production site and method of the invention allow for a cultivation cycle with minimum downtime and maximum yield as the mats with substrate only need to be transferred once and are always (from loading to disposal) transferred along a straight line in a same direction and at a same level, making operation of the transfer devices straight forward, easy and reliable. Furthermore, by the different ground level between growing and harvesting cells, an optimal air flow can be maintained in the growing cells without jeopardizing favourable picking conditions in the harvesting cells. Minimizing or even excluding difficult working postures during picking is further improved by providing racks with tilting shelves in the harvesting cells.

## Claims

1. A method of cultivating mushrooms, said method comprising:
(a) growing mushrooms on a substrate in a growing cell until buds are formed;
(b) transferring the substrate with buds from the growing cell to a harvesting cell;
(c) picking mushrooms from the substrate during a first flush in the harvesting cell;
(d) picking mushrooms from the substrate during a second flush in the harvesting cell;
(e) disposing the substrate;
wherein in the growing cell, the substrate is provided on different layers of stacked longitudinal beds of a first rack; and wherein in the harvesting cell the substrate is provided on different layers of stacked longitudinal beds of a second rack;
**characterized in that** the each of the beds of the first rack has a corresponding bed on the second rack, with corresponding beds extending on a substantially same level in view of the ground level in the growing cell and along a same straight line extending in the longitudinal direction of the concerning beds.

2. The method according to claim 1 wherein the picking of the mushrooms during the first flush is preferably done manually.

3. The method according to claim 1 or 2 wherein the picking of the mushrooms during the second flush is preferably done manually.

4. The method according to any of the preceding claims wherein the ground level of the growing cell differs from the ground level of the harvesting cell by at least 50 cm, preferably at least 60 cm.

5. The method according to any of the preceding claims comprising tilting the beds of second rack over an axis X extending in a longitudinal direction of the beds between a first position wherein the beds are positioned substantially horizontally and a second position wherein the beds are inclined in view of the horizontal.

6. A production site for cultivating mushrooms, said production site comprising:
(a) a growing cell wherein a first rack is provided comprising different layers of vertically stacked longitudinal beds;
(b) a harvesting cell wherein a second rack is provided comprising different layers of vertically stacked longitudinal beds;
**characterized in that** each of the beds of the first rack has a corresponding bed on the second rack, with corresponding beds extending on a substantially same level in view of the ground level in the growing cell and along a same straight line extending in the longitudinal direction of the concerning beds.

7. The production site according to claim 6, wherein a lowermost bed of the first rack is positioned closer to a floor level in the growing cell than a lowermost bed of the second rack is positioned from a floor level in the harvesting cell.

8. The production site according to claims 6 or 7, wherein the growing cell and harvesting cell are positioned at a distance of one another, with a corridor in between both cells and with a bridge unit movably arranged in said corridor, said bridge unit is configured as a rack having multiple beds, each bed of the bridge having a corresponding bed on the first rack, whereby when positioning the bridge between the growing and harvesting cell each bed of the bridge provides a support for the substrate upon transfer thereof from a bed on the first rack to a corresponding bed on the second rack.

9. The production site according to any of claims 6 to 8, wherein the ground level of the growing cell differs from the ground level of the harvesting cell by at least 50 cm, preferably at least 60 cm.

10. The production site according to any of claims 6 to 9, wherein the beds of second rack are configured to rotate over an axis X extending in a longitudinal direction of the beds between a first position wherein the beds are positioned substantially horizontally and a second position wherein the beds are inclined in view of the horizontal.
